# FASCICULE DE BREVET EUROPEEN

(11) **EP 0 522 922 B1**
(45) Date de publication et mention de la délivrance du brevet: **16.10.1996**
(21) Numéro de dépôt: 92401844.3
(22) Date de dépôt: 29.06.1992
(51) Int. Cl.: G01N 29/04, G01N 29/10

(54) **Procédé et dispositif de contrôle par ultrasons de l'état de surface d'un alésage**
Verfahren und Vorrichtung zur Überprüfung des Oberflächenzustands eines Bohrlochs
Method and apparatus for ultrasonic examination of the condition of a bore surface

(30) Priorité: 28.06.1991 FR 9108094
(43) Date de publication de la demande: 13.01.1993
(73) Titulaire: VALDUNES, F-92800 Puteaux (FR)
(72) Inventeur: Dewasmes, Raymond, F-59229 Teteghem (FR)
(74) Mandataire: Martin, Jean-Paul

(56) Documents cités:
- EP-A- 0 139 317
- EP-A- 0 158 856
- GB-A- 780 752
- US-A- 4 372 163

## Description

La présente invention est reLative à un procédé et un dispositif de contrôle par uLtrasons de L'état de surface d'un alésage, notamment de l'alésage d'un essieu-axe de chemin de fer.

Le document EP-A-0 139 317 décrit un procédé de contrôle par ultrasons d'un corps tubulaire, par émission d'ondes ultrasoniques ayant au moins deux fréquences suffisamment différentes, de façon que ces ondes puissent circuler à différentes profondeurs dans le corps à contrôler. Ce procédé ne permet donc pas de contrôler l'état de surface d'un alésage, mais seulement de détecter des défauts dans la masse du corps.

Le document US-A-4 372 163 se rapporte à un procédé pour déterminer la dispersion d'une onde acoustique superficielle dans un corps, afin d'évaluer quantitativement les caractéristiques de surface de celui-ci. Un tel procédé ne permet pas non plus de contrôler l'état de surface d'un alésage.

Les essieux-axes de chemin de fer sont des pièces longues de révolution dans lesquelles est usiné sur toute leur longueur par forage, un alésage axial. On contrôle la surface de l'alésage afin de vérifier qu'elle ne comporte aucun défaut tel qu'un coup d'outil, risquant de diminuer la résistance à la fatigue de l'essieu-axe. Il a été à cet effet proposé d'exécuter des mesures de rugosité. Mais ces mesures ne peuvent être effectuées qu'à proximité des extrémités de l'essieu-axe. Il est également connu d'exécuter un contrôle par ultrasons à partir de l'extérieur de l'essieu-axe. Mais cette méthode ne permet pas de contrôler la totalité de L'alésage. En effet l'essieu-axe comporte plusieurs parties cylindriques reliées par des congés de raccordement. Dans les zones situées à proximité de ces congés de raccordement, il n'est pas possible d'exécuter un contrôle par ultrasons à partir de l'extérieur. En outre, cette méthode est longue car il est nécessaire de balayer toute la surface de l'essieu-axe.

L'invention a donc pour but de réaliser un procédé et un dispositif qui permettent de contrôler l'intégralité de la surface d'un alésage de façon simple et rapide.

Le procédé de contrôle visé par l'invention est caractérisé par les opérations suivantes :
- à l'aide d'un émetteur d'ondes ultrasonores longitudinales orienté convenablement, de fréquence adaptée et coopérant avec les surfaces de l'alésage, on génère sur cette surface une onde transversale de surface,
- on compare l'amplitude des échos obtenus aux valeurs d'une courbe d'étalonnage tracée à partir d'un alésage muni d'un défaut-étalon et identique à l'alésage à contrôler,
- et lorsque l'amplitude d'un écho est supérieure à une fraction déterminée de la valeur indiquée par la courbe d'étalonnage, on considère qu'il y a un défaut.

L'invention concerne également un dispositif pour la mise en oeuvre de ce procédé, dispositif qui est décrit dans la revendication 3.

Suivant un mode de réalisation de ce dispositif, le support comporte une partie montée coulissante sur des tiges de liaison avec une semelle, ces tiges étant pourvues de moyens élastiques tendant à écarter ladite partie et la semelle l'une de l'autre, le logement du bloc palpeur étant ménagé dans ladite partie, sur laquelle est agencée la surface conjuguée avec la surface intérieure de l'alésage.

Ainsi pour introduire ce bloc palpeur à l'intérieur de l'alésage à contrôler, on rapproche l'une de l'autre les deux parties constitutives du support à l'encontre de la force de rappel des moyens élastiques, qui ensuite écarte l'une de l'autre la semelle et la partie coulissant sur les tiges de liaison, en appliquant ces deux pièces contre la surface interne de l'alésage.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en coupe longitudinale axiale d'un essieu-axe de chemin de fer dans l'alésage duquel est placé un dispositif de contrôle conforme à l'invention.

La figure 2 est une vue en coupe longitudinale axiale d'un essieu-axe de référence servant à tracer une courbe d'étalonnage du dispositif de contrôle.

La figure 3 est un exemple de courbes d'étalonnage du dispositif de contrôle selon l'invention.

La figure 4 est une vue en perspective à grandeur réelle d'un mode de réalisation du dispositif de contrôle par ultrasons selon l'invention.

La figure 5 est une vue en élévation longitudinale à échelle agrandie du bloc palpeur de la Fig.4.

La figure 6 est une vue en coupe axiale du bloc palpeur suivant 6/6 de la Fig.5.

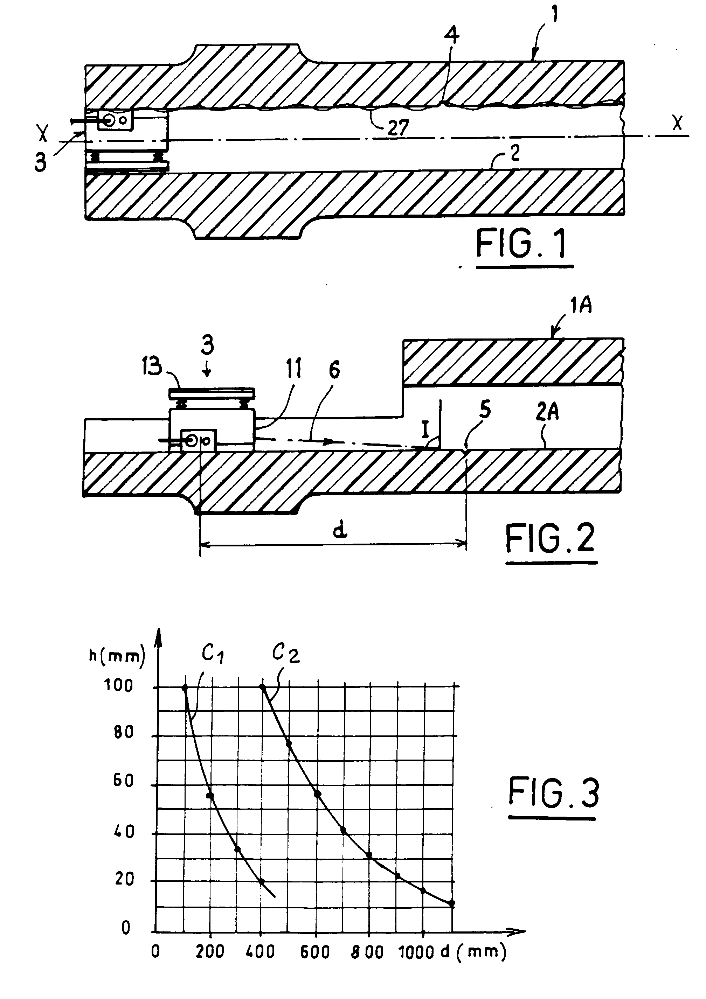

On décrira tout d'abord en référence aux Fig.1 à 3 le procédé de contrôle visé par l'invention.

Un essieu-axe 1 de chemin de fer présente un alésage axial 2 foré, dont on veut contrôler l'état de surface. Pour ce faire, on introduit dans l'alésage 2, à l'une de ses extrémités, un dispositif 3 pouvant émettre et recevoir des ultrasons. Le dispositif 3 est relié à des moyens connus et non représentés de génération d'impulsions, de réception et de visualisation de signaux. En orientant convenablement l'angle d'incidence des ultrasons émis par rapport à la surface 2, on fait disparaître les ondes longitudinales pouvant se propager dans l'essieu-axe 1, et il ne reste qu'une onde de surface 27, dite onde de Rayleigh, qui se propage à la surface de l'alésage 2, cette onde 27 étant représentée symboliquement par une ligne ondulée à la Fig.1.

Si une telle onde 27 rencontre un défaut 4 suffisamment important, elle se réfléchit partiellement sur ce défaut. L'onde réfléchie revient jusqu'au dispositif 3 où elle est détectée de façon connue en soi. Cette détection est visualisée par un moyen de visualisation qui, de façon également connue en soi, permet de déterminer l'amplitude de l'écho et la position du défaut 4 sur une génératrice de la surface de l'alésage 2. En faisant tourner le dispositif 3 autour de l'axe XX de l'alésage 2, on peut contrôler ainsi la surface de l'alésage au moins jusqu'à mi-longueur, et ce sans déplacer le dispositif 3 longitudinalement tout le long de l'alésage 2. En plaçant ensuite le dispositif 3 à l'autre extrémité de l'essieu-axe 1, il est possible de contrôler la seconde moitié de l'alésage 2, et par conséquent la totalité de la surface de l'alésage 2 en deux opérations.

Pour exécuter ce contrôle, il faut au préalable régler et étalonner le dispositif 3. A cet effet on utilise un essieu-axe 1A de même géométrie, de même composition chimique et ayant subi le même traitement thermique que les essieux-axes à contrôler (Fig.2). On ouvre partiellement l'essieu-axe 1A, et on crée à la surface de l'alésage 2A un défaut-étalon 5 situé à peu près à mi-distance des deux extrémités de l'essieu-axe 1A.

Le défaut-étalon 5 peut, de préférence, être une entaille à bords parallèles et à fond plat, ayant par exemple une largeur de lmm et une profondeur de 1mm. Le défaut-étalon 5 peut également être une entaille en V avec par exemple un angle au sommet de 60° et une profondeur de 0,3mm.

Le défaut-étalon 5 est réalisé après une préparation de la surface de l'alésage 2A par des moyens conla surface obtenue ayant une rugosité caractérisée par un coefficient Ra déterminé, par exemple Ra inférieur ou égal à 3,2 (Ra étant le coefficient de rugosité moyenne arithmétique).

Le dispositif 3 émet un faisceau d'ultrasons 6 formant avec la normale à la surface de l'alésage 2A un angle d'incidence I. Le réglage de cet angle d'incidence I s'exécute en positionnant le dispositif 3 sur la surface de l'alésage 2A le long de la génératrice passant par le défaut-étalon 5. Le dispositif 3 émet alors des impulsions ultrasonores et on règle l'orientation de l'émetteur d'ultrasons de telle sorte que l'amplitude de l'écho renvoyé par le défaut-étalon 5 soit maximale. Une fois le réglage d'angle d'incidence réalisé, on procède à l'étalonnage du dispositif 3 en déplaçant celui-ci le long de la génératrice et en enregistrant l'amplitude de l'écho renvoyé par le défaut-étalon 5, en fonction de la distance d entre ce dernier et le dispositif 3. On établit ainsi des courbes d'étalonnage telles que les courbes C1 et C2 de la Fig.3, sur laquelle les ordonnées h représentent l'amplitude de l'écho en fonction de la distance d.

Lors du contrôle d'un alésage 2, on mesure l'amplitude des échos et la distance d entre le dispositif 3 et le défaut détecté, et on compare cette amplitude à celle fournie par la courbe d'étalonnage C. Si l'amplitude mesurée est par exemple la moitié de celle indiquée par la courbe, on peut considérer qu'il n'y a pas de défaut ou que le défaut est acceptable. Dans le cas contraire, on exécute un examen minutieux au voisinage du défaut détecté.

A titre d'exemple numérique indicatif non limitatif, pour un essieu-axe 1 en acier, la fréquence de l'onde ultrasonique longitudinale 27 la mieux adaptée est 2MHz, et l'angle d'incidence I optimal est voisin de 82°.

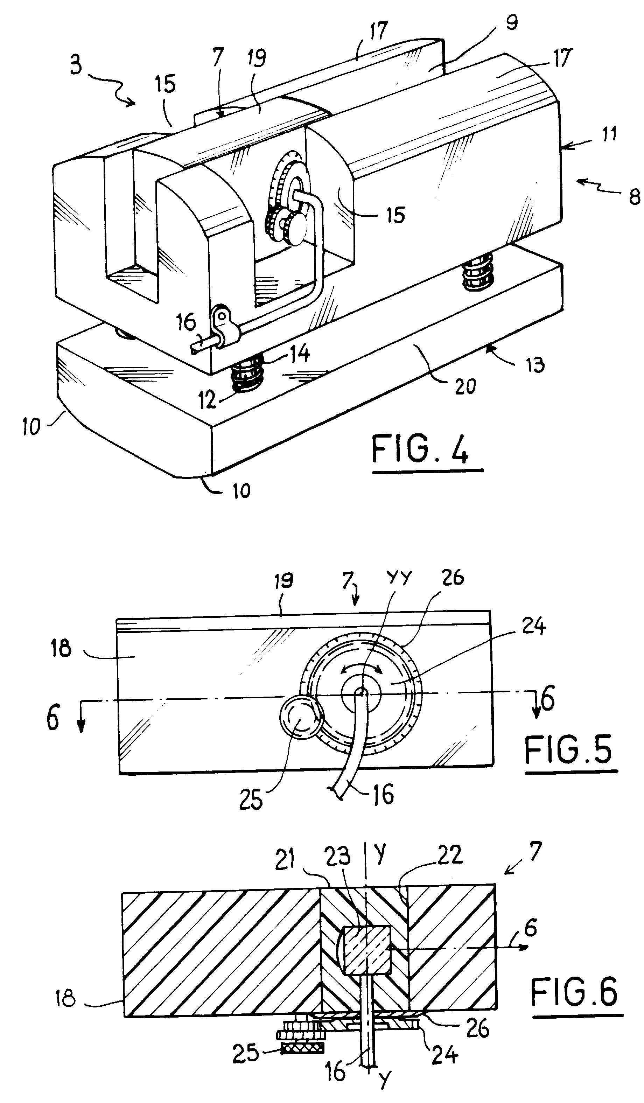

Un mode de réalisation du dispositif 3 de mise en oeuvre du procédé qui vient d'être décrit est représenté aux Fig.4 à 6.

Ce dispositif 3 comprend un bloc palpeur 7 émetteur-récepteur d'ultrasons et un support 8 dans lequel est ménagé un logement 9 adapté pour recevoir le bloc palpeur 7. Le support 8 comporte une partie 11 montée coulissante sur des tiges 12 de liaison avec une semelle 13, ces tiges 12 étant par exemple au nombre de 4 comme représenté. Elles peuvent être fixées à la semelle 13 et coulisser dans des trous correspondants (non visibles aux dessins) ménagés intérieurement à la partie 11, ou inversement les tiges 12 peuvent être fixées à la partie 11 et coulisser dans des trous complémentaires formés dans la semelle 11.

Des moyens élastiques constitués par exemple par des ressorts hélicoïdaux 14 coaxiaux aux tiges 12, comprimés entre la semelle 13 et la partie 11, tendent à écarter ces deux pièces l'une de l'autre.

Dans l'exemple décrit, la partie 11 et la semelle 13 ont une forme allongée, approximativement parallélépipédique. Le logement 9 s'étend longitudinalement d'une extrémité à l'autre de la partie coulissante 11 (en supposant que les tiges 12 sont fixées à la semelle 13 et que la partie 11 coulisse donc sur les tiges 12). Le logement 9 forme donc une saignée longitudinale dans la partie coulissante 11 et est avantageusement complété par deux dégagements latéraux formés dans la partie 11 de chaque côté de la saignée 9 pour permettre la mise en place du bloc palpeur 7. En effet ce dernier est relié aux moyens (non représentés) de génération d'impulsions, de détection et de visualisation, par un cordon 16 qui traverse l'un des dégagements 15.

De part et d'autre du logement longitudinal 9, la surface de la partie 11, opposée à la semelle 13, est conjuguée de la surface cylindrique interne de l'alésage 2 à contrôler, afin de pouvoir coopérer avec celle-ci. Les deux surfaces 17, symétriques l'une de l'autre par rapport au logement longitudinal 9, sont donc des portions de cylindre ayant le même rayon de courbure que l'alésage 2.

La face de la semelle 13 opposée aux surfaces cylindriques 17 et 19 présente également des congés cylindriques 10 de raccordement avec ses faces latérales planes 20; les congés 10 constituent donc des portions de surfaces cylindriques de même rayon de courbure que l'alésage 2 et que les surfaces opposées 17, 19, afin de pouvoir s'appliquer comme celle-ci à la surface de l'alésage 2.

Le bloc palpeur 7 comporte (Fig.5 et 6) une première pièce 18 dont une surface latérale 19 est profilée de manière à être complémentaire des surfaces 17 du support 8. En d'autres termes, la hauteur de la pièce 18 étant égale à la profondeur du logement 9, et la surface latérale 19 ayant le même rayon de courbure que les surfaces 17, affleure celles-ci, de telle sorte que les surfaces 17 et 19 puissent s'appliquer sur la surface cylindrique de l'alésage 2 à contrôler.

Le bloc palpeur 7 comprend une seconde pièce 21, cylindrique, montée rotative autour d'un axe YY dans un trou cylindrique 22 formé dans la première pièce 18, et un émetteur-récepteur d'ultrasons 23 est noyé à l'intérieur de la pièce 21, cette sonde 23 étant reliée au cordon 16. La pièce 21 est réalisée en une matière synthétique appropriée, de façon connue. L'axe de rotation YY de la pièce cylindrique 21 est perpendiculaire à l'axe longitudinal du logement 9 et par conséquent à l'axe XX de l'alésage 2 à contrôler.

Le bloc palpeur 7 est équipé de moyens de réglage de la position angulaire de la pièce cylindrique 21 autour de son axe de rotation YY, qui dans l'exemple représenté sont constitués de la manière suivante : un engrenage 24 est fixé à l'une des faces frontales de la pièce cylindrique 21, coaxialement à l'axe YY et est percé en son centre d'un trou de passage du cordon 16. Un bouton moleté 25 est monté sur la face latérale de la pièce 18 et positionné de manière à pouvoir coopérer avec la denture de l'engrenage 24, dont la position angulaire peut être repérée par tout moyen approprié, par exemple un vernier 26 monté sur la pièce 18. Ainsi la rotation du bouton moleté 25 de commande entraîne l'engrenage 24 et la pièce cylindrique 21 autour de l'axe YY, ce qui permet d'orienter le faisceau ultrasonique 6 dans la direction voulue, à l'intérieur du logement 9 et de l'alésage 2. La rotation du cylindre 21 permet de régler l'angle d'incidence I des ultrasons 6, la position optimale de l'émetteur-récepteur 23 étant repérée à l'aide du vernier 26.

La mise en oeuvre du dispositif de contrôle 3 qui vient d'être décrit s'effectue de la manière suivante.

Avant de contrôler un alésage 2 l'opérateur installe le dispositif dans l'alésage 2A d'un essieu étalon 1A, puis l'opérateur oriente la sonde émettrice-réceptrice 23 autour de son axe de rotation YY en agissant sur le bouton de commande 25, comme expliqué ci-dessus. Cette manoeuvre permet de régler l'angle d'incidence I du faisceau ultrasonique 6, générant à la surface de l'alésage 2A l'onde transversale de surface 27.

Après avoir réglé l'orientation de la sonde émettrice-réceptrice, l'opérateur trace la courbe d'étalonnage comme indiqué ci-dessus.

Pour contrôler un alésage 2, tout d'abord, par pression sur la semelle 13 et sur la partie 11, l'opérateur rapproche ces deux éléments, afin de pouvoir introduire l'ensemble du dispositif 3 à l'intérieur de l'alésage 2 à contrôler.

Dès que la pression exercée sur la semelle 13 et la partie 11 à l'encontre de la force de rappel des ressorts 14 est relâchée, ces derniers écartent les deux pièces l'une de l'autre et appliquent fermement les surfaces 17, 19 et 10 contre la surface de l'alésage 2, le dispositif 3 étant ainsi fixé en position dans l'alésage à contrôler.

Si un défaut tel que 4 existe dans la surface contrôlée, l'amplitude des échos obtenus est comparée aux valeurs de référence de la courbe d'étalonnage C, comme expliqué ci-dessus dans le cadre du procédé conforme à l'invention.

A titre numérique indicatif, la sonde émettrice-réceptrice 23 peut avoir un diamètre de 10mm.

## Revendications

1. Procédé de contrôle par ultrasons de l'état de surface d'un alésage, notamment de l'alésage (2) d'un essieu-axe (1) de chemin de fer, caractérisé en ce que
- à l'aide d'un émetteur (23) d'ondes ultrasonores longitudinales orienté convenablement, de fréquence adaptée et coopérant avec la surface de l'alésage, on génère sur cette surface une onde transversale (27) de surface,
- on compare l'amplitude (h) des échos obtenus aux valeurs d'une courbe d'étalonnage (C) tracée à partir d'un alésage (2A), muni d'un défaut-étalon (5) et identique à l'alésage (2) à contrôler,
- et lorsque l'amplitude (h) d'un écho est supérieure à une fraction déterminée de la va leur indiquée par la courbe d'étalonnage, on considère qu'il y a un défaut.

2. Procédé selon la revendication 1, caractérisé en ce que l'orientation de l'émetteur (23) d'ondes ultrasonores longitudinales est obtenue par des essais sur l'alésage (2A) muni d'un défaut-étalon (5), en modifiant l'orientation dudit émetteur jusqu'à ce qu'on obtienne sur le défaut-étalon un écho d'amplitude (h) maximale, le défaut-étalon (5) étant par exemple une entaille à faces parallèles ou en V.

3. Dispositif pour la mise en oeuvre du procédé selon l'une quelconque des revendications 1 et 2, caractérisé en ce qu'il comprend un bloc palpeur (7) pourvu d'un émetteur-récepteur orientable (23) par rapport au bloc palpeur (7) de façon à modifier l'angle d'incidence (I) des ultrasons (6) émis par ledit émetteur-récepteur (23), et un support (8) dans lequel est ménagé un logement (9) adapté pour recevoir le bloc palpeur, lequel ainsi que son support présentent des surfaces (17, 19) conjuguées de la surface interne de l'alésage (2) à contrôler, afin de pouvoir coopérer avec celle-ci.

4. Dispositif selon la revendication 3, caractérisé en ce que le support (8) comporte une partie (11) adaptée pour recevoir le bloc palpeur (7) et une semelle (13) reliées ensemble par des organes (12) pourvus de moyens élastiques (14) tendant à écarter ladite partie et la semelle l'une de l'autre, ladite partie (11) présentant des surfaces latérales (17) conjuguées de la surface intérieure de l'alésage (2).

5. Dispositif selon la revendication 4, caractérisé en ce que le bloc palpeur (7) comporte une première pièce (18) dont une surface latérale (19) est profilée de manière à être complèmentaire desdites surfaces latérales (17) du support (8), une seconde pièce (21) montée rotative dans la première pièce et qui contient un émetteur-récepteur (23) d'ultrasons, et des moyens (25, 24) pour régler la position angulaire de la seconde pièce autour de son axe de rotation (YY).

6. Dispositif selon la revendication 5, caractérisé en ce que le logement (9) du bloc palpeur (7) s'étend d'une extrémité à l'autre de ladite partie (11) du support en formant une saignée longitudinale débouchant sur l'alésage (2) à contrôler.

7. Dispositif selon la revendication 6, caractérisé en ce que les moyens de réglage de la position angulaire de la seconde pièce (21) comprennent un engrenage (24) solidaire de celle-ci et un bouton (25) de commande coopérant avec cet engrenage, monté sur ladite première pièce (18).

8. Dispositif selon l'une des revendications 4 à 7, caractérisé en ce que la face de la semelle (13) opposée à la partie (11) du support (8) recevant le bloc palpeur (7), présente des congés (10) de raccordement à ses faces latérales (20), conjugués de la surface de l'alésage (2) à contrôler afin de pouvoir s'appliquer sur cette surface de l'alésage.

## Patentansprüche

1. Verfahren zum Überprüfen des Oberflächenzustandes einer Bohrung durch Ultraschall, insbesondere der Bohrung (2) einer Eisenbahnachse (1), dadurch gekennzeichnet, daß
- mit Hilfe eines Senders (23) für longitudinale Ultraschallwellen, die in geeigneter Weise gerichtet sind, mit angepaßter Frequenz und mit der Fläche der Bohrung zusammenwirkend, man auf dieser Oberfläche eine Oberflächenquerwelle (27) erzeugt,
- man die Amplitude (h) von Echos vergleicht, die aus Werten einer Vergleichskurve (C) erhalten werden, welche anhand einer Bohrung (2A), die mit einem Fehlernormal (5) versehen ist und mit der zu überprüfenden Bohrung (2) identisch ist, gezogen worden ist,
- und, wenn die Amplitude (h) eines Echos größer ist als ein Bruchteil, der durch den angegebenen Wert der Markierungskurve bestimmt ist, man feststellt, daß ein Defekt vorliegt.

2. Verfahren nach Anspruch 1, dadurch gekennzeichnet, daß die Ausrichtung des Senders (23) für longitudinale Ultraschallwellen durch Proben an der Bohrung (2A), die mit einem Fehlernormal (5) versehen ist, erhalten wird, indem man die Ausrichtung des Senders abändert, bis man auf dem Fehlernormal ein Echo der maximalen Amplitude (h) erhält, wobei das Fehlernormal (5) beispielsweise ein Einschnitt mit parallelen Flächen oder in V-Form ist.

3. Vorrichtung zum Durchführen des Verfahrens nach einem der Ansprüche 1 und 2, dadurch gekennzeichnet, daß sie einen Fühlerblock (7), der mit einem in bezug auf den Fühlerblock (7) ausrichtbaren Sender-Empfänger (23) versehen ist, um den Einfallswinkel (I) für Ultraschall (6) zu ändern, der von dem Sender-Empfänger (23) ausgesendet wird, und einen Träger (3), in dem eine Ausnehmung (9), die zum Aufnehmen des Pühlerblockes gebildet ist, angebracht ist, aufweist, wobei dieser ebenso wie sein Träger konjugierte Oberflächen (17, 19) der Innenfläche der Bohrung (2), die zu überprüfen ist, zeigt, damit sie mit dieser zusammenwirken können.

4. Vorrichtung nach Anspruch 3, dadurch gekennzeichnet, daß der Träger (8) einen Abschnitt (11) aufweist, der so ausgelegt ist, daß er den Fühlerblock (7) und eine Sohle (13) aufnehmen kann, die miteinander durch Elemente (2) verbunden sind, welche mit elastischen Mitteln (14) versehen sind, die den Abschnitt und die Sohle voneinander wegbewegen wollen, wobei der Abschnitt (11) seitliche Flächen (17) zeigt, die zu der Innenfläche der Bohrung (2) konjugiert sind.

5. Vorrichtung nach Anspruch 4, dadurch gekennzeichnet, daß der Fühlerblock (7) ein erstes Stück (18), dessen eine Seitenfläche (19) derart profiliert ist, daß sie komplementär zu den Seirenflächen (7) des Trägers (8) ist, ein zweites Stück (21), das drehbar in dem ersten Stück angeordnet ist und das einen Sender-Empfänger (23) für Ultraschall enthält, und Einrichtungen (25, 24) zum Einstellen der Winkelposition des zweiten Stückes um seine Drehachse (YY) aufweist.

6. Vorrichtung nach Anspruch 5, dadurch gekennzeichnet, daß die Ausnehmung (9) des Fühlerblockes (7) sich von einem Ende des Abschnitts (11) des Trägers zum anderen erstreckt, wobei ein Längsschnitt gebildet wird, der auf der zu überprüfenden Bohrung (2) mündet.

7. Vorrichtung nach Anspruch 6, dadurch gekennzeichnet, daß die Einrichtungen zum Einstellen der Winkelposition des zweiten Stückes (21) ein Getriebe (24), das einstückig mit diesem ist, und einen Steuerknopf (25), der mit diesem Getriebe zusamnenwirkt, auf dem ersten Stück (18) angebracht, aufweist.

8. Vorrichtung nach einem der Ansprüche 4 bis 7, dadurch gekennzeichnet, daß die Fläche der Sohle (13), die dem Teil (11) des Trägers (8), das den Pühlerblock (7) aufnimnt, gegenüberliegt, an seinen seitlichen Flächen (20) Übergangskehlen (10) zeigt, die zu der Oberfläche der zu überprüfenden Bohrung (2) Konjugiert sind, damit sie an dieser Fläche der Bohrung anliegen können.

## Claims

1. Method of ultrasonic monitoring of the surface condition of a bore, particularly the bore (2) of a railway straight axle (1), characterised in that
• with the aid of an emitter (23) of longitudinal ultrasonic waves appropriately aligned, of adapted frequency and co-operating with the surface of the bore, there is generated on this surface a transverse surface wave (27),
• the amplitude (h) of the echoes obtained is compared to the values of a calibration curve (C) traced from a bore (2A) equipped with a standard defect (5) and identical with the bore (2) to be monitored,
• and when the amplitude (h) of an echo is greater than a specific fraction of the value indicated by the calibration curve, it is considered that there is a defect.

2. Method according to claim 1, characterised in that the orientation of the emitter (23) of longitudinal ultrasonic waves is obtained by tests on the bore (2A) equipped with a standard defect (5), modifying the orientation of said emitter until a maximum-amplitude (h) echo is obtained on the standard defect, the standard defect for example being a notch with parallel or V-configured faces.

3. Device for putting into effect the method according to any one of claims 1 and 2, characterised in that it comprises a sensor unit (7) provided with an emitter-receiver (23) which can be oriented relative to the sensor unit (76) so as to modify the angle of incidence (I) of the ultrasound (6) emitted by the emitter-receiver (23), and a support (8) in which there is provided a housing (9) adapted to receive the sensor unit, the latter with its support having surfaces (17, 19) united with the internal surface of the bore (2) to be monitored, in order to co-operate therewith.

4. Device according to claim 3, characterised in that the support (8) comprises a portion (11) adapted to receive the sensor unit (7) and a sole plate (13), interconnected by members (12) provided with resilient means (14) tending to force said portion and the sole plate apart from one another, said portion (11) having lateral surfaces (17) united with the internal surface of the bore (2).

5. Device according to claim 54, characterised in that the sensor unit (7) comprises a first part (18) one lateral surface (19) of which is profiled to be complementary with the said lateral surfaces (17) of the support (8), a second part (21) rotatably mounted in the first part and which contains an ultrasonic emitter-receiver (23), and means (25, 24) of regulating the angular position of the second part about its axis of rotation (YY).

6. Device according to claim 5, characterised in that the housing (9) of the sensor unit (7) extends from one end to the other of the said portion (11) of the support, forming a longitudinal kerf opening into the bore (2) to be monitored.

7. Device according to claim 6, characterised in that the regulating means for the angular position of the second part (21) comprise a gearing (24) integral with the latter and a control knob (25) co-operating with this gearing, mounted on said first part (18).

8. Device according to one of claims 4 to 7, characterised in that the face of the sole plate (13) opposite the portion (11) of the support (8) receiving the sensor unit (7) has connecting grooves (10) on its lateral faces (20), united with the surface of the bore (2) to be monitored, in order that it may be applied to this surface of the bore.
